# EUROPÄISCHE PATENTSCHRIFT

(11) **EP 0 736 711 B1**
(45) Veröffentlichungstag und Bekanntmachung des Hinweises auf die Patenterteilung: **30.06.1999**
(21) Anmeldenummer: 95116630.5
(22) Anmeldetag: 21.10.1995
(51) Int. Cl.: F16J 15/32

(54) **Dichtungsanordnung**
Sealing arrangement
Dispositif d'étanchéité

(30) Priorität: 07.04.1995 DE 19513098
(43) Veröffentlichungstag der Anmeldung: 09.10.1996
(73) Patentinhaber: Firma Carl Freudenberg, 69469 Weinheim (DE)
(72) Erfinder: Stadler, Rolf, D-64646 Heppenheim (DE)

(56) Entgegenhaltungen:
- WO-A-89/10505
- DE-C- 4 237 190

## Beschreibung

Die Erfindung betrifft eine Dichtungsanordnung, umfassend einen in einer Gehäusebohrung angeordneten Radialwellendichtring, der eine abzudichtende Welle mit einer Dichtlippe unter radialer Vorspannung dichtend umschließt, wobei die Dichtlippe an einem radial nach innen weisenden ersten Schenkel eines im wesentlichen L-förmigen Stützrings aus zähhartem Werkstoff angeordnet ist, wobei der sich in axialer Richtung erstreckende zweite Schenkel radial außenseitig eine Beschichtung aus elastomerem Werkstoff aufweist, die unter radialer Vorspannung an die die Gehäusebohrung begrenzende Wandung angelegt ist und wobei in radialer Richtung zwischen dem zweiten Schenkel und der Welle ein Wälzlager angeordnet ist und wobei die Dichtlippe in axialer Richtung auf der dem abzudichtenden Raum zugewandten Seite des Wälzlagers und des ersten Schenkels angeordnet ist.

Eine solche Dichtungsanordnung ist aus dem DE-GM 9 400 766 bekannt. Das Wälzlager ist als Kugellager ausgebildet und umfaßt einen äußeren und einen inneren Laufring, die durch als Wälzkörper ausgebildete Kugeln aufeinander abgestützt sind. Der äußere Laufring ist in zwei axial hintereinander angeordnete Ringteile aufgeteilt, die mittels eines eine Vorspannung des Lagers erzeugenden Federelements an die Wälzkörper angedrückt sind. Eine Dichtung dichtet einen durch die Laufringe gebildeten Ringspalt gegenüber der Lagerumgebung ab. Die Dichtung ist an das äußere Laufringteil anvulkanisiert, d.h. die Dichtung ist einstückig ineinander übergehend mit dem Wälzlager ausgebildet. Dabei ist allerdings zu beachten, daß das mit der Dichtung kombinierte Wälzlager aus vergleichsweise kompliziert geformten Einzelteilen besteht, was in fertigungstechnischer und wirtschaftlicher Hinsicht wenig zufriedenstellend ist. Ein separates Auswechseln des Wälzlagers und/oder des Dichtrings ist bei der vorbekannten Dichtungsanordnung nicht möglich.

Eine weitere Dichtungsanordnung ist aus der DE 42 37 190 C1 bekannt. Die Beschichtung ist radial außenseitig des zweiten Schenkels in einem axialen Teilbereich von einem zweiten Stützring aus zähhartem Werkstoff umschlossen, der die Wandung unter radialer Vorspannung unmittelbar anliegend berührt. Die Beschichtung überragt den zweiten Stützring außerhalb des axialen Teilbereichs herstellungsbedingt in radialer Richtung und dichtet gegenüber der Wandung ab. Der Radialwellendichtring ist auf der dem abzudichtenden Raum abgewandten Seite des Wälzlagers angeordnet; das Wälzlager ist innerhalb des abzudichtenden Raums angeordnet.

Der Erfindung liegt die Aufgabe zugrunde, eine Dichtungsanordnung der eingangs genannten Art derart weiterzuentwickeln, daß eine einwandfreie Abdichtung des abzudichtenden Raums gewährleistet ist, daß das Wälzlager außerhalb des abzudichtenden Raums angeordnet ist, um eine Differenzdruckbeaufschlagung des Wälzlagers und einen damit einhergehender Verlust von Wälzlager-Schmiermittel zu vermeiden und daß eine freie Relativbeweglichkeit des Wälzlager-lnnenrings zum Wälzlager-Außenring sichergestellt ist, wenn der Stützring die Stirnseite des Wälzlager-Außenrings anliegend berührt.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es im Rahmen der vorliegenden Erfindung vorgesehen, daß der erste Schenkel in einem radial inneren ersten Teilbereich entgegen der Richtung des Wälzlagers in Richtung des abzudichtenden Raums gekröpft ausgebildet ist und daß der erste Teilbereich mit einer Radialebene einen spitzen Winkel einschließt, der 2 bis 15° beträgt und daß sich der erste und ein sich im wesentlichen in radialer Richtung erstreckender zweite Teilbereich zwischen dem Innen- und dem Außenring des Wälzlagers berühren. Hierbei ist von Vorteil, daß der Einbauraum des Wälzlagers keinen Bestandteil des abzudichtenden Raums bildet und das gekapselte Wälzlager daher keinen Differenzdrücken ausgesetzt ist. Außerhalb des abzudichtenden Raums herrscht ebenso Umgebungsdruck wie innerhalb des auf Lebensdauer geschmierten Lagers. Durch die Druckentlastung wird ein Verlust des Schmiermittels aus dem Lager vermieden und die Haltbarkeit des Wälzlagers deutlich erhöht.

Der erste Schenkel ist in einem radial inneren ersten Teilbereich entgegen der Richtung des Wälzlagers gekröpft ausgebildet, wobei der erste Teilbereich mit einer Radialebene einen spitzen Winkel einschließt, der 2 bis 15, bevorzugt 5 bis 10° beträgt. Dadurch, daß der erste Teilbereich in Richtung des abzudichtenden Raums gekröpft ist, wird eine freie Relativbeweglichkeit des Wälzlager-lnnenrings zum Wälzlager-Außenring sichergestellt. Anders als der Außenring des Wälzlagers, berührt der Innenring des Wälzlagers mit seiner Stirnseite den entsprechenden Teilbereich des Stützrings nicht.

Der erste und ein sich im wesentlichen in radialer Richtung erstreckender zweiter Teilbereich berühren sich zwischen dem Innen- und dem Außenring des Wälzlagers. Dadurch ist einerseits sichergestellt, daß die gesamte Stirnseite des Außenrings des Wälzlagers am zweiten Teilbereich des Stützrings anliegt und andererseits der Innenring des Wälzlagers frei beweglich zum ersten Teilbereich und zum Außenring ist.

Im Hinblick auf eine einfache und kostengünstige Herstellbarkeit der Dichtungsanordnung kann es vorgesehen sein, daß die Dichtlippe und die Beschichtung materialeinheitlich ausgebildet sind. Der elastomere Werkstoff, aus dem die Dichtlippe und die Beschichtung bestehen, ist dabei sowohl zur dynamischen Abdichtung der rotierenden Welle als auch zur statischen Abdichtung gegenüber des Gehäuses geeignet. Ferner besteht die Möglichkeit, daß die Dichtlippe und die Beschichtung materialeinheitlich und einstückig ineinander übergehend ausgebildet sind, daß die Dichtlippe und die Beschichtung materialeinheitlich, jedoch zweistückig ausgebildet sind und daß die Dichtlippe und die Beschichtung aus unterschiedlichen elastomeren Materialien bestehen und zweistückig ausgebildet sind. Einer materialeinheitlich und einstückig ineinander übergehenden Ausgestaltung von Dichtlippe und Beschichtung wird im Rahmen der vorliegenden Erfindung der Vorzug gegeben.

Der erste und der zweite Schenkel sind bevorzugt jeweils nur auf der dem Wälzlager abgewandten Seite mit elastomerem Werkstoff versehen. Schwingungen, die beispielsweise durch eine Unwucht der Welle hervorgerufen werden, werden durch die radial außenseitig des zweiten Schenkels angeordnete Beschichtung gedämpft. Der Außenring des Wälzlagers berührt den bevorzugt aus einem metallischen Werkstoff bestehenden Stützring radial innenseitig des ersten Schenkels unmittelbar anliegend. Das Wälzlager ist derart in den Stützring eingepreßt, daß die dem abzudichtenden Raum zugewandte Stirnseite den sich in radialer Richtung erstreckenden ersten Schenkel mit ihrem Außenring anliegend berührt. Die Positionierung des Wälzlagers innerhalb des Stützrings ist daher besonders einfach. Außerdem weist die vormontierbare Einheit, bestehend aus Radialwellendichtring und Wälzlager nur geringe Abmessungen in axialer Richtung auf.

Um eine zuverlässige und dauerhafte Abdichtung auch dann zu gewährleisten, wenn relativ zum atmosphärischen Druck gar kein oder nur ein geringer Differenzdruck am abzudichtenden Gehäuse anliegt, kann es vorgesehen sein, daß die Dichtlippe von einer Ringwendelfeder unter radialer Vorspannung außenseitig umschlossen ist.

Bei der beanspruchten Dichtungsanordnung ist es vorgesehen, daß der Radialwellendichtring nur eine dynamisch beanspruchte Dichtlippe aufweist. Dadurch weist der gesamte Radialwellendichtring sehr geringe Abmessungen in axialer Richtung auf. Außerdem wird durch die Relativbeweglichkeit nur einer Dichtlippe zum abzudichtenden Bauteil sowohl die Reibung als auch die Reibleistung reduziert. Eine Staublippe, die beispielsweise oftmals dann zur Anwendung gelangt, wenn der Radialwellendichtring auf der dem abzudichtenden Raum abgewandten Seite des Wälzlagers angeordnet ist, ist bei der beanspruchten Dichtungsanordnung entbehrlich, da auf der dem abzudichtenden Raum abgewandten Seite des Radialwellendichtrings das Wälzlager in den Stützring eingepreßt und dadurch eine Beaufschlagung der dynamisch beanspruchten Dichtlippe mit Verunreinigungen ausgeschlossen ist.

Die beanspruchte Dichtungsanordnung kann als Lagerhülse zur Aufnahme eines Kurbelwellenlagers einer Verbrennungskraftmaschine verwendet werden. Durch die Verwendung der beanspruchten Dichtungsanordnung als Lagerhülse besteht keine Notwendigkeit, Lagersitze im Kurbelgehäuse der Verbrennungskraftmaschine durch eine spanabhebende Bearbeitung zu erzeugen. Die beanspruchte Dichtungsanordnung ist einerseits zur schwingungsdämpfenden Aufnahme eines Wälzlagers und andererseits zum Abdichten eines Wellendurchtritts durch ein Gehäuse anwendbar.

Durchmessertoleranzen des zweiten Schenkels, des Stützrings und/oder der Gehäusebohrung können durch die elastische Beschichtung problemlos ausgeglichen werden.

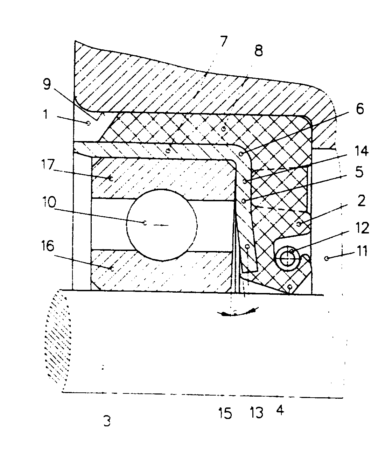

Ein Ausführungsbeispiel der erfindungsgemäßen Dichtungsanordnung wird nachfolgend anhand der Zeichnung näher erläutert.

In der Zeichnung ist eine Dichtungsanordnung gezeigt, die als Lagerhülse zur Aufnahme eines als Kurbelwellenlager ausgebildeten Wälzlagers 10 zur Anwendung gelangt. Der Radialwellendichtring 2 ist in eine Gehäusebohrung 1 eingepreßt, wobei die Gehäusebohrung 1 einen Bestandteil eines Kurbelgehäuses einer Verbrennungskraftmaschine bildet. Der Radialwellendichtring 2 umschließt eine abzudichtende Welle 3 mit einer dynamisch beanspruchten Dichtlippe 4, wobei die Dichtlippe 4 mit dem radial nach innen weisenden Schenkel 5 des Stützring 6 verbunden ist. Der zweite Schenkel 7 ist radial außenseitig mit einer Beschichtung 8 aus elastomerem Werkstoff versehen, die als statische Dichtung ausgebildet ist. Die Beschichtung 8 und die Dichtlippe 4 sind einstückig ineinanderübergehend ausgebildet und bestehen aus einem übereinstimmenden elastomeren Werkstoff. Die Beschichtung 8 ist radial außenseitig von der die Gehäusebohrung 1 begrenzenden Wandung 9 unter radialer Vorspannung umschlossen. In diesem Ausführungsbeispiel ist das Wälzlager 10 als Rillenkugellager ausgebildet und direkt in den Spalt eingepreßt, der in radialer Richtung durch die Welle 3 und den zweiten Schenkel 7 begrenzt ist. Die Dichtlippe 4 ist in axialer Richtung auf der dem abzudichtenden Raum 11 zugewandten Seite des Wälzlagers 10 und des ersten Schenkels 5 angeordnet. Um eine gute Relativbeweglichkeit von Innen- 16 und Außenring 17 des Wälzlagers 10 zueinander zu gewährleisten, ist es vorgesehen, daß der erste Schenkel 5 in zwei Teilbereiche 13, 14 unterteilt ist, wobei der radial innere erste Teilbereich 13 in Richtung des abzudichtenden Raums 11 verformt ist. Eine Berührung des Innenrings 16 mit dem inneren Teilbereich 13 erfolgt während der bestimmungsgemäßen Verwendung der Dichtungsanordnung nicht. Der erste Teilbereich 13 und eine Radialebene schließen dabei einen Winkel 15 ein, der in diesem Ausführungsbeispiel 7° beträgt.

Um unter allen Betriebsbedingungen eine ausreichend große radiale Anpressung der Dichtlippe 4 an die Oberfläche der abzudichtenden Welle 3 sicherzustellen, ist eine Ringwendelfeder 12 vorgesehen.

Die Beschichtung 8 kann radial außenseitig mit einer sich in axialer Richtung erstreckenden Wellung versehen sein, um die statische Abdichtung der Dichtungsanordnung weiter zu verbessern.

## Patentansprüche

1. Dichtungsanordnung, umfassend einen in einer Gehäusebohrung (1) angeordneten Radialwellendichtring (2), der eine abzudichtende Welle (3) mit einer Dichtlippe (4) unter radialer Vorspannung dichtend umschließt, wobei die Dichtlippe an einem radial nach innen weisenden ersten Schenkel (5) eines im wesentlichen L-förmigen Stützrings (6) aus zähhartem Werkstoff angeordnet ist, wobei der sich in axialer Richtung erstreckende zweite Schenkel (7) radial außenseitig eine Beschichtung (8) aus elastomerem Werkstoff aufweist, die unter radialer Vorspannung an die die Gehäusebohrung begrenzende Wandung (9) angelegt ist und wobei in radialer Richtung zwischen dem zweiten Schenkel und der Welle ein Wälzlager (10) angeordnet ist und wobei die Dichtlippe in axialer Richtung auf der dem abzudichtenden Raum (11) zugewandten Seite des Wälzlagers und des ersten Schenkels angeordnet ist, dadurch gekennzeichnet, daß der erste Schenkel (5) in einem radial inneren ersten Teilbereich (13) entgegen der Richtung des Wälzlagers (10) in Richtung des abzudichtenden Raums (11) gekröpft ausgebildet ist und daß der erste Teilbereich (13) mit einer Radialebene einen spitzen Winkel (15) einschließt, der 2 bis 15° beträgt und daß sich der erste und ein sich im wesentlichen in radialer Richtung erstreckender zweiter Teilbereich (13, 14) zwischen dem Innen- (16) und dem Außenring (17) des Wälzlagers (10) berühren.

2. Dichtungsanordnung nach Anspruch 1, dadurch gekennzeichnet, daß die Dichtlippe (4) und die Beschichtung (8) materialeinheitlich ausgebildet sind.

3. Dichtungsanordnung nach einem der Ansprüche 1 bis 2, dadurch gekennzeichnet, daß der erste (5) und der zweite Schenkel (7) jeweils nur auf der dem Wälzlager (10) abgewandten Seite mit elastomerem Werkstoff versehen sind.

4. Dichtungsanordnung nach einem der Ansprüche 1 bis 3, dadurch gekennzeichnet, daß die Dichtlippe (4) von einer Ringwendelfeder (12) unter radialer Vorspannung umschlossen ist.

5. Dichtungsanordnung nach einem der Ansprüche 1 bis 4, dadurch gekennzeichnet, daß der Radialwellendichtring (2) nur eine dynamisch beanspruchte Dichtlippe (4) aufweist.

6. Verwendung einer Dichtungsanordnung nach einem der Ansprüche 1 bis 5 als Lagerhülse zur Aufnahme eines Kurbelwellenlagers einer Verbrennungskraftmaschine.

## Claims

1. A sealing arrangement, comprising a radial shaft-sealing ring (2) which is arranged in a housing bore (1) and which sealingly surrounds with a sealing lip (4), under radial prestress, a shaft (3) which is to be sealed off, the sealing lip (4) being arranged on a radially inward-pointing first leg (5) of an essentially L-shaped supporting ring (6) made of tough material, the axially extending second leg (7) having, radially on the outside, a coating (8) of elastomeric material, which is laid, under radial prestress, onto the wall (9) delimiting the housing bore (1), and a rolling bearing (10) being arranged in the radial direction between the second leg (7) and the shaft (3), and the sealing lip (4) being arranged, in the axial direction, on that side of the rolling bearing (10) and of the first leg (5) which faces the space (11) to be sealed off, characterized in that the first leg (5) is designed, in a radially inner first part region (13), to be bent at right angles, opposite to the direction of the rolling bearing (10), in the direction of the space (11) to be sealed off, and in that the first part region (13) forms with a radial plane an acute angle (15) which is 2 to 15°, and in that the first and an essentially radially extending second part region (13,14) touch one another between the inner ring (16) and outer ring (17) of the rolling bearing (10).

2. A sealing arrangement according to claim 1, characterized in that the sealing lip (4) and the coating (8) are of materially integral design.

3. A sealing arrangement according to either of claims 1 or 2, characterized in that the first (5) and the second (7) leg are in each case provided with elastomeric material on only the side which faces away from the rolling bearing (10).

4. A sealing arrangement according to any one of claims 1 to 3, characterized in that the sealing lip (4) is surrounded, under radial prestress, by an annular helical spring (12).

5. A sealing arrangement according to any one of claims 1 to 4, characterized in that the radial shaft-sealing ring (2) has only one dynamically stressed sealing lip (4).

6. The use of a sealing arrangement according to any one of claims 1 to 5 as a bearing sleeve for receiving a crankshaft bearing of an internal combustion engine.

## Revendications

1. Dispositif d'étanchéité comprenant un joint d'étanchéité à lèvre radiale (2) situé dans un alésage (1) de carter et entourant de manière étanche, avec une lèvre d'étanchéité (4) et sous l'effet d'une précontrainte radiale, un arbre (3) à étanchéifier, la lèvre d'étanchéité (4) étant située sur une première branche (5), dirigée radialement vers l'intérieur, d'une bague d'appui (6) en matière rigide ayant essentiellement la forme d'un L, la seconde branche (7) s'étendant dans la direction axiale étant pourvue, sur le côté extérieur dans le sens radial, d'un revêtement (8) en matière élastomère qui est en contact, sous l'effet d'une précontrainte radiale, avec la paroi (9) limitant l'alésage (1) de carter, et un palier à roulement (10) étant situé entre la seconde branche (7) et l'arbre (3), dans la direction radiale, et la lèvre d'étanchéité (4) étant située, dans la direction axiale, sur le côté du palier à roulement (10) qui est tourné vers l'espace (11) à étanchéifier et de la première branche (5), caractérisé en ce que la première branche (5) est exécutée, dans une première zone partielle (13) interne dans le sens radial, de manière à être coudée dans la direction opposée au palier à roulement (10), en direction de l'espace (11) à étanchéifier, et en ce que la première zone partielle (13) forme avec un plan radial un angle aigu (15) mesurant de 2 à 15°, et en ce que la première zone partielle (13) et une seconde zone partielle (14) s'étendant essentiellement dans la direction radiale sont en contact entre la bague intérieure (16) et la bague extérieure (17) du palier à roulement (10).

2. Dispositif d'étanchéité selon la revendication 1, caractérisé en ce que la lèvre d'étanchéité (4) et le revêtement (8) sont exécutés dans un même matériau.

3. Dispositif d'étanchéité selon l'une des revendications 1 à 2, caractérisé en ce que la première (5) et la seconde (7) branches sont, à chaque fois, pourvues de matière élastomère seulement sur le côté éloigné du palier à roulement (10).

4. Dispositif d'étanchéité selon l'une des revendications 1 à 3, caractérisé en ce que la lèvre d'étanchéité (4) est entourée, sous l'effet d'une précontrainte radiale, par un ressort spiral annulaire (12).

5. Dispositif d'étanchéité selon l'une des revendications 1 à 4, caractérisé en ce que le joint d'étanchéité à lèvre radiale (2) comprend seulement une lèvre d'étanchéité (4) soumise à des efforts dynamiques.

6. Utilisation d'un dispositif d'étanchéité selon l'une des revendications 1 à 5 en tant que coussinet destiné à recevoir un palier de vilebrequin d'un moteur à combustion interne.
